(19) Europäisches Patentamt
European Patent Office
Office européen des brevets

(11) **EP 4 270 082 A1**

(12) **EUROPEAN PATENT APPLICATION**
published in accordance with Art. 153(4) EPC

(43) Date of publication:
**01.11.2023 Bulletin 2023/44**

(51) International Patent Classification (IPC):
***G02B 13/04*** *(2006.01)*      ***G02B 13/18*** *(2006.01)*

(21) Application number: **21910402.3**

(52) Cooperative Patent Classification (CPC):
**G02B 13/04; G02B 13/18**

(22) Date of filing: **10.12.2021**

(86) International application number:
**PCT/JP2021/045675**

(87) International publication number:
**WO 2022/138253 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.12.2020  JP 2020212916**

(71) Applicant: **Kyocera Corporation
Kyoto-shi Kyoto 612-8501 (JP)**

(72) Inventor: **KOSUGE, Masanori
Kyoto-shi, Kyoto 612-8501 (JP)**

(74) Representative: **Viering, Jentschura & Partner
mbB
Patent- und Rechtsanwälte
Am Brauhaus 8
01099 Dresden (DE)**

(54) **IMAGING LENS**

(57)     An imaging lens (10) includes, in order from an object side, a first lens group having negative power, a second lens group having negative power, a third lens group having positive power, a fourth lens group having negative power, and a fifth lens group having positive power. Letting a distance on an optical axis from a lens surface at an extreme end on the object side in the first lens group to a lens surface at an extreme end on an image side in the fifth lens group be D; and a distance on the optical axis from the lens surface at the extreme end on the image side in the fifth lens group to an imaging surface be Db, the imaging lens satisfies $1.10 \le D/Db \le 3.00$.

FIG. 1

**Description**

TECHNICAL FIELD

The present disclosure relates to an imaging lens.

BACKGROUND OF INVENTION

With the spread of surveillance cameras, vehicle-mounted cameras, and the like, demands for imaging lenses applicable to various uses have been increasing. For example, an imaging lens disclosed as being suitable for sensing cameras includes at least six lenses categorized into five groups (Patent Literature 1).

CITATION LIST

PATENT LITERATURE

Patent Literature 1: Japanese Unexamined Patent Application Publication No. 2019-90989

SUMMARY

According to the present disclosure, an imaging lens includes a plurality of lens groups each including at least one lens. The imaging lens includes, in order from an object side, a first lens group having negative power, a second lens group having negative power, a third lens group having positive power, a fourth lens group having negative power, and a fifth lens group having positive power. The imaging lens satisfies Expression (1) below.

$$1.10 \leq D/Db \leq 3.00 \qquad (1)$$

In Expression (1), D denotes a distance on an optical axis from a lens surface at an extreme end on the object side in the first lens group to a lens surface at an extreme end on an image side in the fifth lens group. Furthermore, Db denotes a distance on the optical axis from the lens surface at the extreme end on the image side in the fifth lens group to an imaging surface.

BRIEF DESCRIPTION OF THE DRAWINGS

FIG. 1 is a sectional view of an imaging lens.
FIG. 2 is a sectional view of an imaging lens according to Example 1.
FIGs. 3A, 3B, and 3C are graphs illustrating spherical aberration, astigmatism, and distortion, respectively, in Example 1.
FIG. 4 is a sectional view of an imaging lens according to Example 2.
FIGs. 5A, 5B, and 5C are graphs illustrating spherical aberration, astigmatism, and distortion, respectively, in Example 2.
FIG. 6 is a sectional view of an imaging lens according to Example 3.
FIGs. 7A, 7B, and 7C are graphs illustrating spherical aberration, astigmatism, and distortion, respectively, in Example 3.
FIG. 8 is a sectional view of an imaging lens according to Example 4.
FIGs. 9A, 9B, and 9C are graphs illustrating spherical aberration, astigmatism, and distortion, respectively, in Example 4.
FIG. 10 is a sectional view of an imaging lens according to Example 5.
FIGs. 11A, 11B, and 11C are graphs illustrating spherical aberration, astigmatism, and distortion, respectively, in Example 5.
FIG. 12 is a sectional view of an imaging lens according to Example 6.
FIGs. 13A, 13B, and 13C are graphs illustrating spherical aberration, astigmatism, and distortion, respectively, in Example 6.
FIG. 14 is a sectional view of an imaging lens according to Example 7.
FIGs. 15A, 15B, and 15C are graphs illustrating spherical aberration, astigmatism, and distortion, respectively, in Example 7.
FIG. 16 is a sectional view of an imaging lens according to Example 8.
FIGs. 17A, 17B, and 17C are graphs illustrating spherical aberration, astigmatism, and distortion, respectively, in Example 8.

DESCRIPTION OF EMBODIMENTS

Among imaging lenses to be included in vehicle-mounted cameras and the like, imaging lenses for sensing use are demanded to have a small size as a whole with performance including high resolution. Such imaging lenses are also demanded to have optical performance including a wider angle of view and excellent image quality even in a peripheral portion of a captured image. One measure that meets such demands is to ensure a satisfactory back focus. The following description of the present disclosure relates to an imaging lens that exhibits excellent optical performance with a satisfactory back focus while having a short overall length.

According to an embodiment, an imaging lens includes a plurality of lens groups each including at least one lens. The lens groups are, in order from an object side, a first lens group having negative power, a second lens group having negative power, a third lens group having positive power, a fourth lens group having negative power, and a fifth lens group having positive power. Letting a distance on an optical axis from a lens surface at an extreme end on the object side in the first lens group to a lens surface at an extreme end on an image side in the fifth lens group be D; and a distance on the optical axis from the lens surface at the extreme end on the image side in the fifth lens group to an imaging surface be Db, the imaging lens satisfies Expression (1) below.

$$1.10 \leq D/Db \leq 3.00 \qquad (1)$$

The second lens group may include a second lens having negative power and a third lens having positive power.

An object-side surface of the third lens may have a smaller radius of curvature in absolute value than an image-side surface of the third lens.

Letting the radius of curvature of the object-side surface of the third lens be R4 and the radius of curvature of the image-side surface of the third lens be R5, the imaging lens may satisfy Expression (2) below.

$$0.07 \leq |R4|/|R5| \leq 0.99 \qquad (2)$$

Letting the focal length of the entire system be f and the thickness of the third lens be d3, the imaging lens may satisfy Expression (3) below.

$$0.75 \leq f/d3 \leq 2.67 \qquad (3)$$

The second lens and the third lens may be cemented to each other.

The third lens group may include a fourth lens having positive power. The fourth lens group may include a fifth lens having negative power. The fifth lens group may include a sixth lens having positive power.

Letting the focal length of the fourth lens be f4 and the focal length of the entire system be f, the imaging lens may satisfy Expression (4) below.

$$1.14 \leq f4/f \leq 1.78 \qquad (4)$$

Letting the temperature coefficient of refractive index of the fourth lens be $dn_4/dt$; the temperature coefficient of refractive index of the sixth lens be $dn_6/dt$; and the composite focal length of the fourth to sixth lenses be $f_{46}$, the imaging lens may satisfy Expression (5) below.

$$-1.21 \leq (dn_4/dt + dn_6/dt)/f_{46} \leq 0.38 \quad (5)$$

Letting the thickness of the second lens be d2 and the thickness of the third lens be d3, the imaging lens may satisfy Expression (6) below.

$$0.10 \leq d2/d3 \leq 1.44 \qquad (6)$$

Letting the radius of curvature of the lens surface at the extreme end on the object side in the first lens group be R1, the imaging lens may satisfy Expression (7) below.

$$0.58 \leq |R1/D| \leq 6.35 \qquad (7)$$

To provide an imaging lens for sensing use in a small size as a whole with performance including high resolution and with optical performance including a wider angle of view and excellent image quality even in a peripheral portion of a captured image, ensuring a satisfactory back focus is one measure. Ensuring a satisfactory back focus leads to ensuring a degree of freedom in, for example, the addition of a filter such as an infrared cut filter.

On the other hand, ensuring a satisfactory back focus may increase the overall length of the imaging lens. Therefore, an embodiment of the present disclosure employs the following configuration.

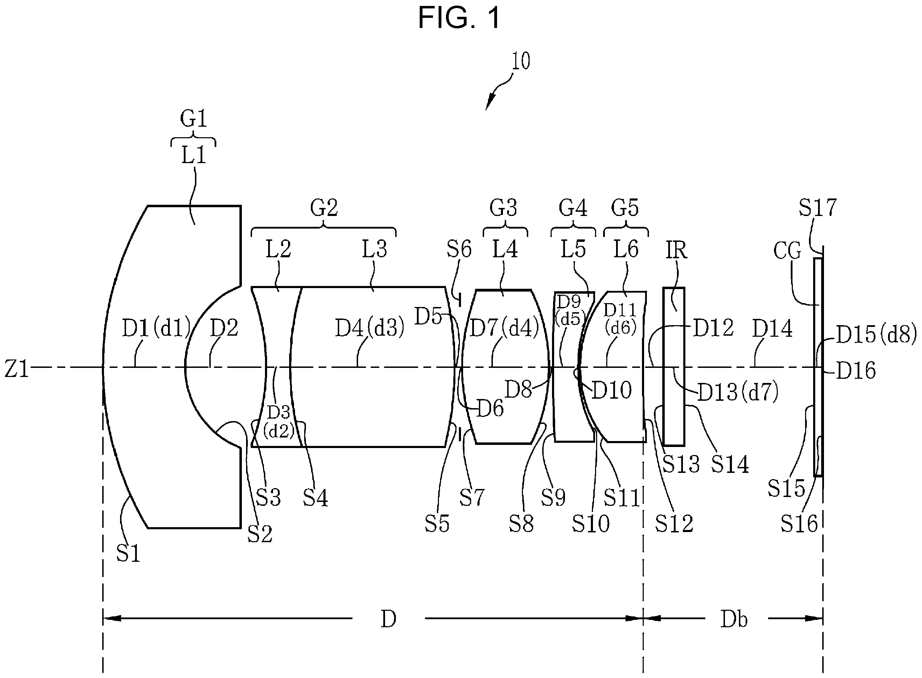

Referring to FIG. 1, an imaging lens 10 is configured to capture an image of an object, that is, a subject of imaging, by forming an image of the object onto an imaging surface. In the present embodiment, the imaging surface is denoted as an imaging surface S17, which is included in an image sensor. The image sensor is configured to generate an image by receiving light from an object through the imaging lens 10 and photoelectrically converting the received light.

The imaging lens 10 includes a plurality of lens groups each including at least one lens. The imaging lens 10 has a five-group configuration in which a first lens group G1 having negative power, a second lens group G2 having negative power, a third lens group G3 having positive power, a fourth lens group G4 having negative power, and a fifth lens group G5 having positive power are arranged on an optical axis Z1 and in that order from the object side.

In the present embodiment, the first lens group G1 consists of a first lens L1 having negative power, the second lens group G2 consists of a second lens L2 having negative power and a third lens L3 having positive power, the third lens group G3 consists of a fourth lens L4 having positive power, the fourth lens group G4 consists of a fifth lens L5 having negative power, and the fifth lens group G5 includes a sixth lens L6 having positive power. The second lens group G2 may be a cemented lens consisting of the second lens L2 and the third lens L3.

The first lens group G1 contributes to the widening of the angle of view of the imaging lens 10. Specifically, the imaging lens 10 has a relatively wide angle of view and a wide chief ray angle (CRA), thereby brightening a peripheral portion of the captured image.

The second lens group contributes to the correction of distortion and chromatic aberration. The third lens group G3 mainly contributes to the correction of spherical aberration. The fourth lens group G4 mainly contributes to the correction of astigmatism with the formation of a so-called air lens, which is formed of air, between the fourth lens group G4 and the fifth lens group G5. The fifth lens group G5 mainly contributes to the correction of astigmatism and field curvature.

The imaging lens 10 including the five lens groups encompasses imaging lenses each including the following: a lens having substantially no power; an optical element such as a diaphragm, a filter, or a cover glass but the lens; and a mechanical element such as a lens flange or an imaging device (image sensor).

According to the present embodiment, the imaging lens 10 includes a diaphragm S6, which is located between the second lens group G2 and the third lens group G3. Those lens groups located on the object side relative to the diaphragm S6 constitute a front group. Those lens groups located on the imaging-surface side relative to the diaphragm S6 constitute a rear group. A cover glass CG protects the imaging surface S17 of the image sensor. The imaging lens 10 forms an image of a subject onto the imaging surface S17 through the cover glass CG. An infrared cut filter IR is provided between the fifth lens group G5 and the cover glass CG.

Distances such as back focus are calculated by converting each of the thicknesses of relevant elements, such as the infrared cut filter IR and the cover glass CG, located between the imaging surface S17 and the lens groups into the thickness of air.

The lens at the extreme end on the object side in the first lens group G1 is made of a glass material having excellent durability, in view of being exposed to the installation environment. In the present embodiment, the lens at the extreme end on the object side is the first lens L1.

In the present embodiment, the first lens L1, the second lens L2, the third lens L3, the fourth lens L4, the fifth lens L5, and the sixth lens L6 are all made of glass. Therefore, the first lens L1, the second lens L2, the third lens L3, the fourth lens L4, the fifth lens L5, and the sixth lens L6 are each more resistant to the environment than lenses made of resin, which easily expands or contracts with temperature change. Note that any one or more of the first lens L1, the second lens L2, the third lens L3, the fourth lens L4, the fifth lens L5, and the sixth lens L6 may be made of resin. Furthermore, one or more of a lens barrel or a spacer and the like (not illustrated) included in the imaging lens 10 are made of resin. The lens barrel or the spacer and the like may alternatively be made of a material (metal or the like) that is much more resistant to the environment.

The first lens L1, the second lens L2, the third lens L3, and the fifth lens L5 are each a spherical lens having a spherical surface on each of the object side and the image side. The first lens L1 has a biconcave shape that is concave on the object side and on the image side, or a meniscus shape that is convex on the object side. The second lens L2 has a biconcave shape that is concave on the object side and on the image side. The third lens L3 has a biconvex shape that is convex on the object side and on the image side. As with the first lens L1, the fifth lens L5 has a biconcave shape that is concave on the object side and on the image side, or a meniscus shape that is convex on the object side. The fifth lens L5 may have a concave surface on the image side. The first lens L1, the second lens L2, and the fifth lens L5 are each a concave lens having negative power. The third lens is a convex lens having positive power.

The fourth lens L4 and the sixth lens L6 each have a biconvex shape that is convex on the object side and on the image side, or a meniscus shape that is convex on the object side or on the image side. One of the fourth lens L4 and the sixth lens L6 may have a biconvex shape that is convex on the object side and on the image side, while the other may have a meniscus shape that is convex on the object side or on the image side. That is, the fourth lens L4 and the sixth lens L6 may serve as a pair of lenses one of which has a biconvex shape that is convex on the object side and on the image side and the other of which has a meniscus shape that is convex on the object side or on the image side. The fourth lens L4 and the sixth lens L6 are each a convex lens having positive power. The fourth lens L4 and the sixth lens L6 are each an aspherical lens having an aspherical surface on at least one of the object side or the image side.

In the imaging lens 10, a lens surface S1 is located at the extreme end on the object side in the first lens group G1, and a lens surface S 12 is located at the extreme end on the image side in the fifth lens group G5. Letting the distance on the optical axis from the lens surface S 1 to the lens surface S 12 be D; and the distance on the optical axis from the lens surface S 12 to the imaging surface S 17 be Db, the imaging lens 10 satisfies Expression (1) below.

$$1.10 \leq D/Db \leq 3.00 \qquad (1)$$

The distance Db on the optical axis from the lens surface S12 at the extreme end on the image side in the fifth lens group G5 to the imaging surface S17 is regarded as the back focus. Expression (1) defines a relationship established in the imaging lens 10 between the distance D on the optical axis from the lens surface S1 at the extreme end on the object side in the first lens group G1 to the lens surface S12 at the extreme end on the image side in the fifth lens group G5 and the back focus. Specifically, Expression (1) is a conditional expression specifying the range of the ratio of the distance D to the distance Db.

Satisfying Expression (1) provides a satisfactory back focus and a satisfactory resolution. That is, in the imaging lens 10 that has a five-group configuration in which the first lens group G1 having negative power; the second lens group G2 having negative power; the third lens group G3 having positive power; the fourth lens group G4 having negative power; and the fifth lens group G5 having positive power are arranged on the optical axis Z1 and in that order from the object side, satisfying Expression (1) makes the imaging lens 10 exhibit excellent optical performance with a satisfactory back focus while having a short overall length.

In the imaging lens 10, the second lens group G2 may include a second lens L2 having negative power and a third lens L3 having positive power. Employing such a second lens group G2 having a two-lens configuration provides design flexibility. The second lens L2 and the third lens L3 may be cemented to each other. Employing such a second lens group G2 in the form of a cemented lens consisting of two lenses reduces the overall length of the imaging lens 10 while maintaining the optical performance, and contributes to increased accuracy and energy saving in the assembly process.

In the imaging lens 10, a lens surface S4, which is on the object side of the third lens L3, may have a smaller radius of curvature in absolute value than a lens surface S5, which is on the image side of the third lens L3. Employing such a third lens L3 having the above shape realizes favorable correction of aberrations in the imaging lens 10. Note that the radius of curvature is positive if the surface is convex toward the object side, and is negative if the surface is concave away from the object side.

Letting the radius of curvature of the object-side lens surface S4 of the third lens L3 be R4 and the radius of curvature of the image-side lens surface S5 of the third lens L3 be R5, the third lens L3 may satisfy Expression (2) below.

$$0.07 \leq |R4|/|R5| \leq 0.99 \qquad (2)$$

Expression (2) defines a condition for the shape of the third lens from the absolute values of the respective radii of curvature of the object-side lens surface S4 and the image-side lens surface S5 of the third lens L3. Employing such a third lens L3 shaped as defined by Expression (2) realizes favorable correction of aberrations in the imaging lens 10.

Letting the focal length (in mm, which also applies to the following description) of the entire system of the imaging lens 10 be f and the thickness of the third lens be d3, the third lens L3 may satisfy Expression (3) below. Regarding reference signs, such as "D1 (d1)", given in the drawings, a part with parentheses, such as "(d1)", indicates the thickness of the lens of interest. On the other hand, a part with a capital letter, such as "D 1", indicates the interval or the distance.

$$0.75 \leq f/d3 \leq 2.67 \qquad (3)$$

Expression (3) defines a condition for correcting particularly chromatic aberration in the optical performance of the imaging lens 10 while reducing the overall length of the imaging lens 10. Referring to FIG. 1, satisfying the condition defined by Expression (3) for the thickness d3 of the third lens L3 and the focal length f of the entire system of the imaging lens 10 realizes more favorable correction of chromatic aberration.

In the imaging lens 10, the third lens group G3 may include a fourth lens L4 having positive power, the fourth lens group G4 may include a fifth lens L5 having negative power, and the fifth lens group G5 may include a sixth lens L6 having positive power. Employing such a configuration in which the third lens group G3, the fourth lens group G4, and the fifth lens group G5 include the fourth lens L4, the fifth lens L5, and the sixth lens L6, respectively, reduces the number of lenses included in the imaging lens 10.

Letting the focal length of the fourth lens L4 be f4 and the focal length of the entire system be f, the imaging lens 10 may satisfy Expression (4) below.

$$1.14 \leq f4/f \leq 1.78 \qquad (4)$$

Expression (4) defines a condition for favorably controlling the influence of spherical aberration in the imaging lens 10 by specifying the range of the power of the fourth lens L4 constituting the third lens group G3. Satisfying Expression (4) realizes satisfactory performance of the imaging lens 10.

At least one of the fourth lens L4 or the sixth lens L6 may be made of a material having a negative temperature coefficient of refractive index. Letting the temperature coefficient of refractive index of the fourth lens L4 be $dn_4/dt$; the temperature coefficient of refractive index of the sixth lens L6 be $dn_6/dt$; and the composite focal length of the fourth to sixth lenses L4 to L6 be $f_{46}$, the imaging lens 10 may satisfy Expression (5) below. Note that the composite focal length $f_{46}$ refers to the focal length of the rear group consisting of the fourth lens L4, the fifth lens L5, and the sixth lens L6.

$$-1.21 \leq (dn_4/dt + dn_6/dt)/f_{46} \leq 0.38 \quad (5)$$

In the imaging lens 10, employing such a fourth lens L4 or sixth lens L6 that is made of a material having a negative temperature coefficient of refractive index reduces the defocusing of the imaging lens 10, even if the imaging lens 10 or a unit including the imaging lens 10 expands partially or totally because of a temperature change in, for example, the environment of the imaging lens 10. Consequently, the imaging lens 10 maintains favorable optical performance, including imaging performance, in a wide temperature range from a low temperature (for example, 0°C or below) to a high temperature (for example, 100°C or above).

Expression (5) defines a condition for setting the difference between the temperature coefficient of refractive index $dn_4/dt$ of the fourth lens L4 and the temperature coefficient of refractive index $dn_6/dt$ of the sixth lens L6 to fall within a specific range in negative or positive value and thus specifying the ratio of the above difference to the composite focal length $f_{45}$. Satisfying Expression (5) favorably reduces the deterioration in the optical performance of the imaging lens 10 even at times of temperature change.

Letting the thickness of the second lens be d2 and the thickness of the third lens be d3, the imaging lens 10 may satisfy Expression (6) below.

$$0.10 \leq d2/d3 \leq 1.44 \qquad (6)$$

Expression (6) defines a condition for further enhancing the correction of chromatic aberration in the imaging lens 10 by using the second lens group G2. Satisfying Expression (6) realizes a favorable balance of chromatic aberration between the front group and the rear group.

Letting the radius of curvature of the lens surface S1 at the extreme end on the object side in the first lens group G1 be R1, the imaging lens 10 may satisfy Expression (7) below.

$$0.58 \le |R1/D| \le 6.35 \qquad (7)$$

Expression (7) defines a condition for favorably reducing the ghost that may be caused by the reflection from the image sensor. Satisfying Expression (7) favorably reduces the ghost that may be caused when, for example, the reflection from the imaging surface S17 and/or the like of the image sensor is focused on the lens surface S1 of the first lens L1 and/or the like. Furthermore, satisfying Expression (7) improves the imaging performance of the imaging lens 10.

EXAMPLES

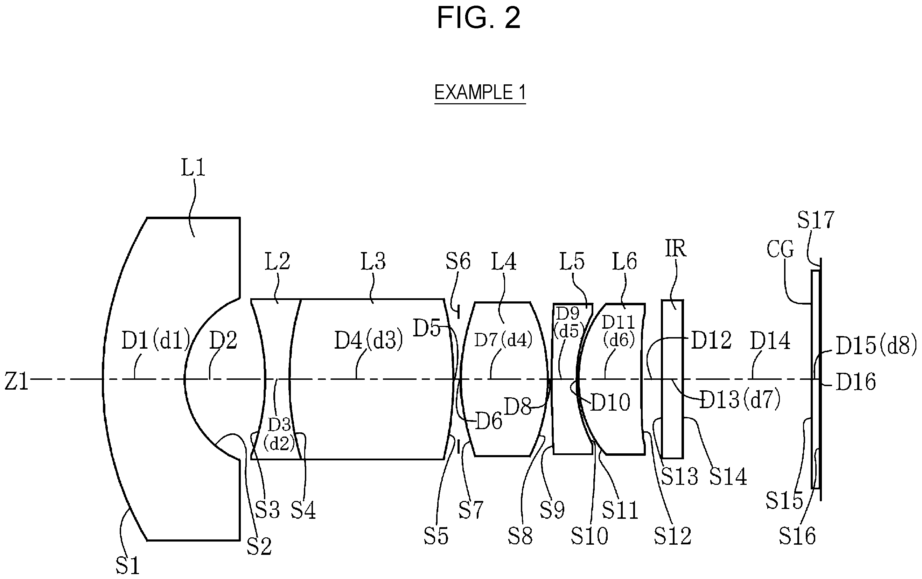

Examples of the imaging lens 10 will now be described. As illustrated in FIG. 2, the surfaces are numbered as Si (where i = 1 to 17) in order from the object-side surface S1 of the first lens L1. S6 denotes the diaphragm. S13 denotes the object-side surface of the infrared cut filter IR. S14 denotes the image-side surface of the infrared cut filter IR. S15 denotes the object-side surface of the cover glass CG. S16 denotes the image-side surface of the cover glass CG. S17 denotes the imaging surface of the image sensor.
A surface interval Di (where i = 1 to 16, in mm) refers to the interval on the optical axis Z1 from a surface Si to a surface Si + 1 (where i is an integer of 1 to 16). The distance D on the optical axis from the lens surface S1 at the extreme end on the object side in the first lens group G1 to the lens surface S12 at the extreme end on the image side in the fifth lens group is the sum of D1 to D11 (D = D1 + D2 + D3 + D4 + D5 + D6 + D7 + D8 + D9 + D10 + D11). The distance Db on the optical axis from the lens surface at the extreme end on the image side in the fifth lens group to the imaging surface is the sum of D12 to D16 (Db = D12 + D13 + D14 + D15 + D16).
Tables 1 and 2 given below summarize lens data in Example 1. Table 1 relates to an imaging lens 10 according to Example 1 and provides the focal length f (in mm), the F-number Fno at infinity, and the total angle of view $2\omega$ (in degrees, horizontal) thereof. Table 1 further provides, for each surface Si, the surface number "i", the radius of curvature Ri (where i = 1 to 12, in mm), the surface interval Di, the refractive index nd for d-line (a wavelength of 587.6 nm), and the Abbe number vd (= (nd - 1)/(nF - nC), where nF denotes the refractive index for the F-line (a wavelength of 486.1 nm), and nC denotes the refractive index for the C-line (a wavelength of 656.3 nm)). Furthermore, the temperature coefficient of refractive index $dn_4/dt$ of the fourth lens L4 is provided in the cell of dn/dt for surface number 7, and the temperature coefficient of refractive index $dn_6/dt$ of the sixth lens L6 is provided in the cell of dn/dt for surface number 11. In this specification, the unit of the temperature coefficient of refractive index is $10^{-6}k^{-1}$. The symbol "*" given to some of the surface numbers "i" indicates that the surface of interest is aspherical. The surfaces "i" numbered without the symbol "*" are each spherical. The symbol "∞" denotes infinity. The above definitions also apply to the other examples to be described below.

[Table 1]

| EXAMPLE 1 BASIC LENS DATA f = 6.01, Fno =2.20, 2ω = 80 | | | | | |
|---|---|---|---|---|---|
| i | Ri | Di | nd | vd | dn/dt |
| 1 | 15.274 | 4.00 | 1.804 | 46.6 | |
| 2 | 4.238 | 3.93 | | | |
| 3 | -10.466 | 1.18 | 1.497 | 81.5 | |
| 4 | 13.394 | 8.00 | 1.804 | 46.6 | |
| 5 | -16.102 | 0.24 | | | |
| 6 (DIAPHRAGM) | ∞ | 0.10 | | | |
| 7* | 8.822 | 4.24 | 1.497 | 81.5 | -6.4 |
| 8* | -8.399 | 0.20 | | | |
| 9 | 79.226 | 1.20 | 1.7552 | 27.5 | |
| 10 | 6.856 | 0.10 | | | |
| 11* | 5.918 | 3.07 | 1.497 | 81.5 | -6.4 |
| 12* | -3427.592 | 6.23 | | | |
| 13 (IR) | ∞ | 1.00 | 1.51633 | 64.1 | |

(continued)

| EXAMPLE 1 BASIC LENS DATA f = 6.01, Fno =2.20, 2ω = 80 | | | | | |
|---|---|---|---|---|---|
| i | Ri | Di | nd | vd | dn/dt |
| 14 (IR) | ∞ | 1.00 | | | |
| 15 (CG) | ∞ | 0.40 | 1.51633 | 64.1 | |
| 16 (CG) | ∞ | 0.12 | | | |
| 17 (IMAGING SURFACE) | ∞ | | | | |

The aspherical surface is expressed by an aspherical expression, which is given as Math. 1 below. In the aspherical expression of Math. 1, "Z" denotes the depth (mm) of the aspherical surface, "h" denotes the distance (mm) from the optical axis to the lens surface, "C" denotes paraxial curvature (that is, letting paraxial radius of curvature be R (in mm), C = 1/R), "K" denotes conic constant, and "Ai" denotes aspherical coefficient. Table 2 summarizes "K" and "Ai" for each of the aspherical surfaces (see those with * in Table 1) in Example 1.

[Math. 1]

$$Z = \frac{Ch^2}{1 + \sqrt{1 - (K+1)(Ch)^2}} + \sum A_i h^i$$

[Table 2]

| ASPHERICAL COEFFICIENT | 7TH SURFACE (S7) | 8TH SURFACE (S8) | 11 TH SURFACE (S11) | 12TH SURFACE (S12) |
|---|---|---|---|---|
| | EXAMPLE 1 ASPHERICAL SURFACE DATA | | | |
| K | -9.135E-01 | 1.509E+00 | -5.090E+00 | -1.000E+00 |
| A4 | -3.195E-04 | 4.788E-04 | 2.999E-03 | 7.466E-04 |
| A6 | -7.677E-06 | 6.277E-07 | -9.617E-05 | 7.454E-05 |
| A8 | -2.008E-07 | 4.306E-07 | 6.540E-06 | -4.892E-06 |
| A10 | -2.234E-08 | -2.633E-08 | -1.035E-07 | 4.630E-07 |

According to Example 1, as summarized in Table 3 below, the imaging lens 10 satisfies the conditions defined by Expression (1), Expression (2), Expression (3), Expression (4), Expression (5), Expression (6), and Expression (7).

[Table 3]

| EXAMPLE 1 LENS DATA | |
|---|---|
| D/Db | 3.00 |
| \|R4\|/\|R5\| | 0.83 |
| f/d3 | 0.75 |
| f4/f | 1.57 |
| $(dn_4/dt + dn_6/dt)/f_{46}$ | -1.21 |
| d2/d3 | 0.15 |

(continued)

| EXAMPLE 1 LENS DATA | |
|---|---|
| |R1/D| | 0.58 |

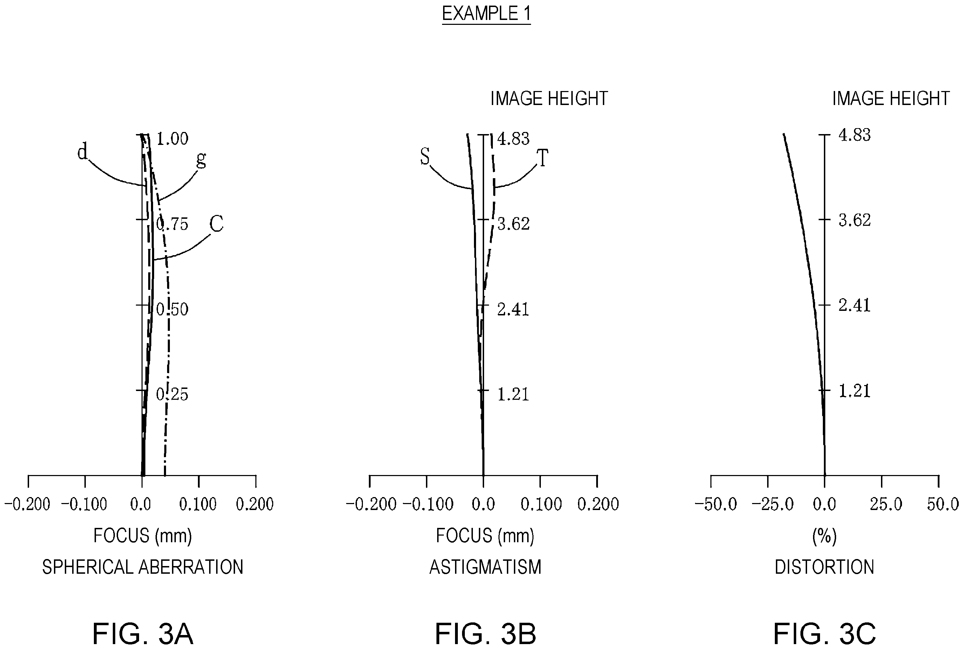

FIG. 3A relates to the imaging lens 10 according to Example 1 and illustrates the spherical aberration thereof for each of the C-line, the d-line, and the g-line. FIG. 3B relates to the imaging lens 10 according to Example 1 and illustrates the astigmatism, S, in the sagittal (radical) direction and the astigmatism, T, in the tangential (meridional) direction thereof for the d-line. FIG. 3C relates to the imaging lens 10 according to Example 1 and illustrates the distortion thereof. In each Example, the astigmatism and the distortion are data obtained at 20°C.

As understood from FIGs. 2 and 3A to 3C, the imaging lens 10 according to Example 1 employed a configuration in which six lenses were categorized into five groups with two aspherical surfaces. Such a configuration cost low and was excellent in terms of mass productivity. Yet, the imaging lens 10 exhibited excellent optical performance with a satisfactory back focus while having a short overall length.

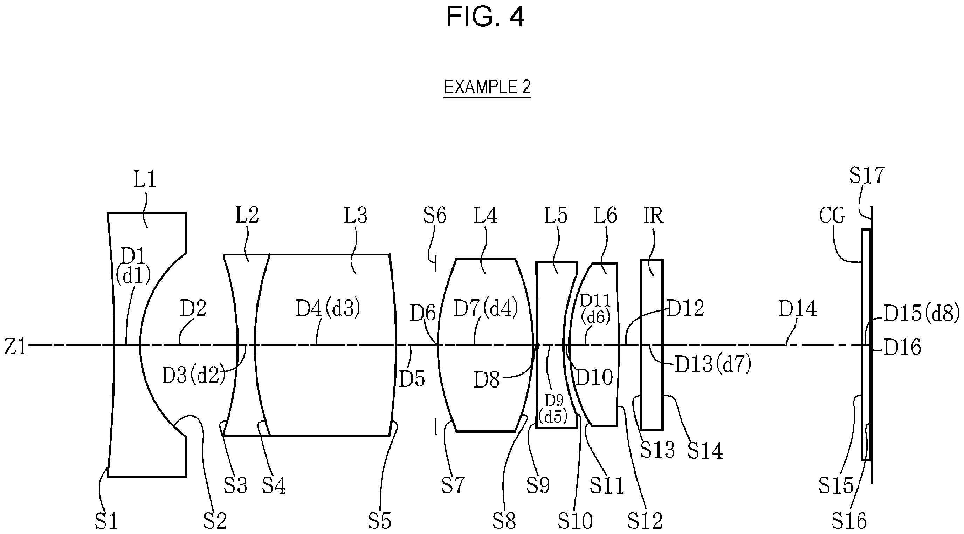

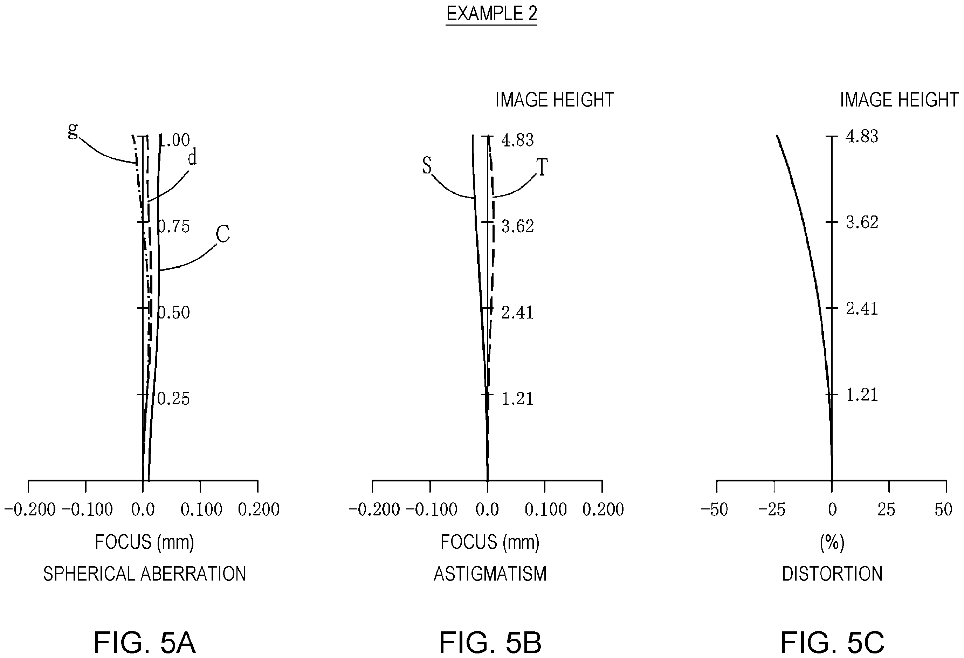

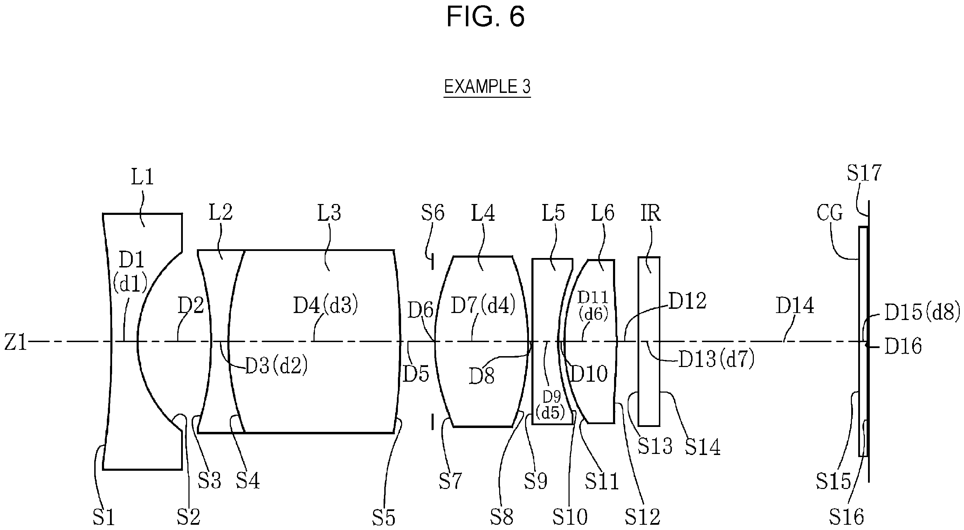

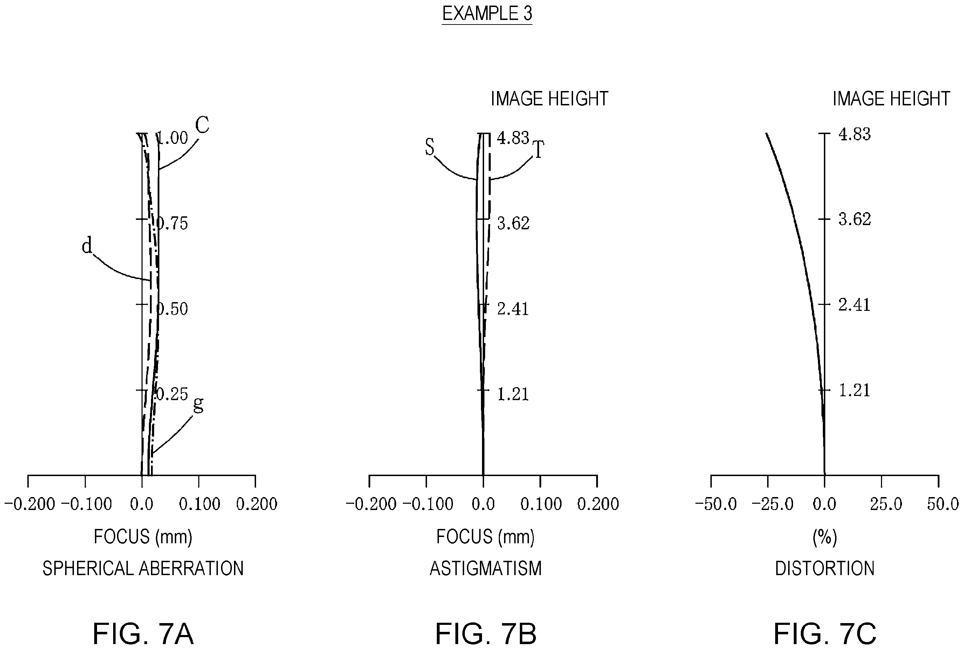

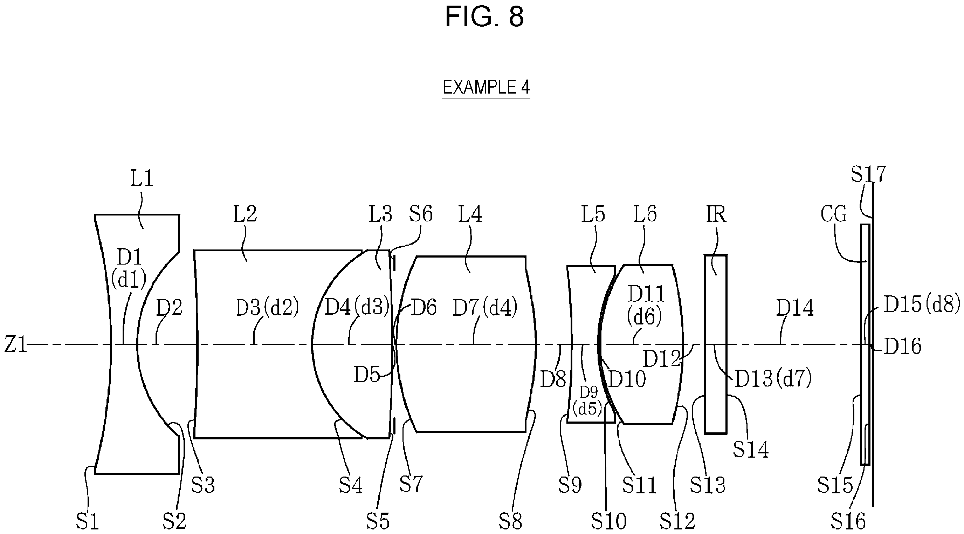

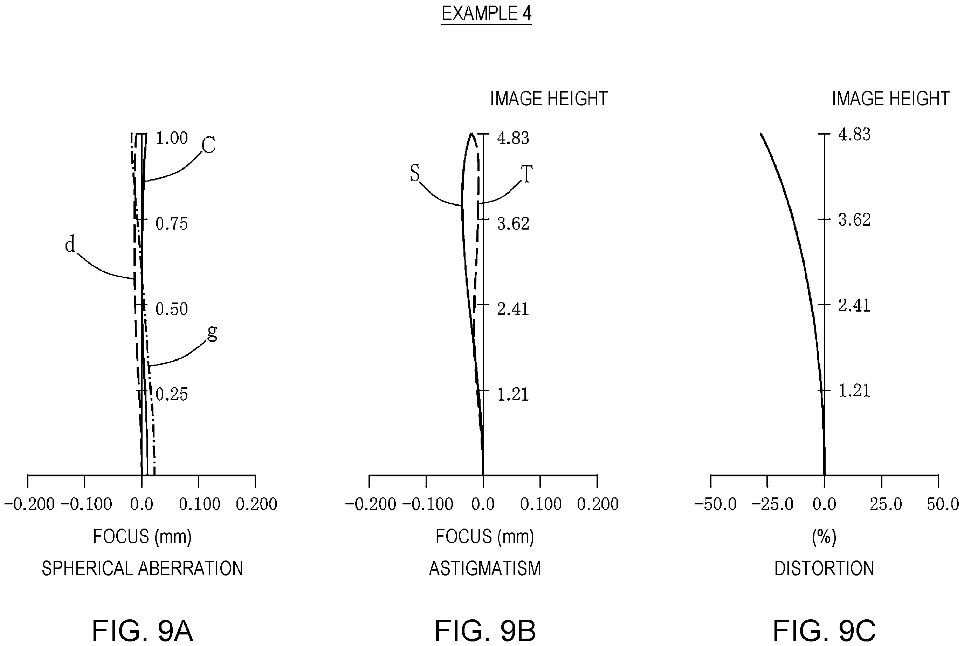

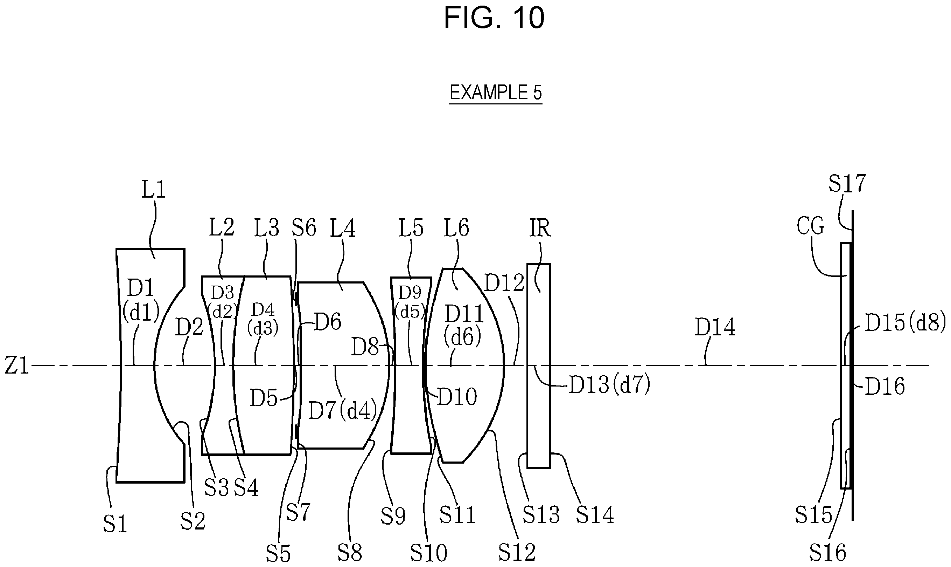

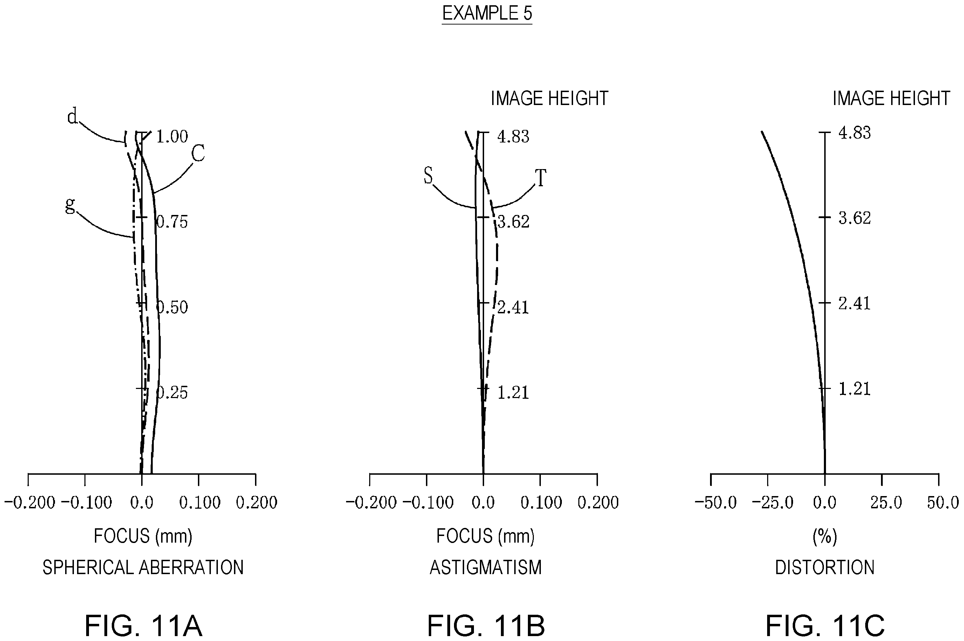

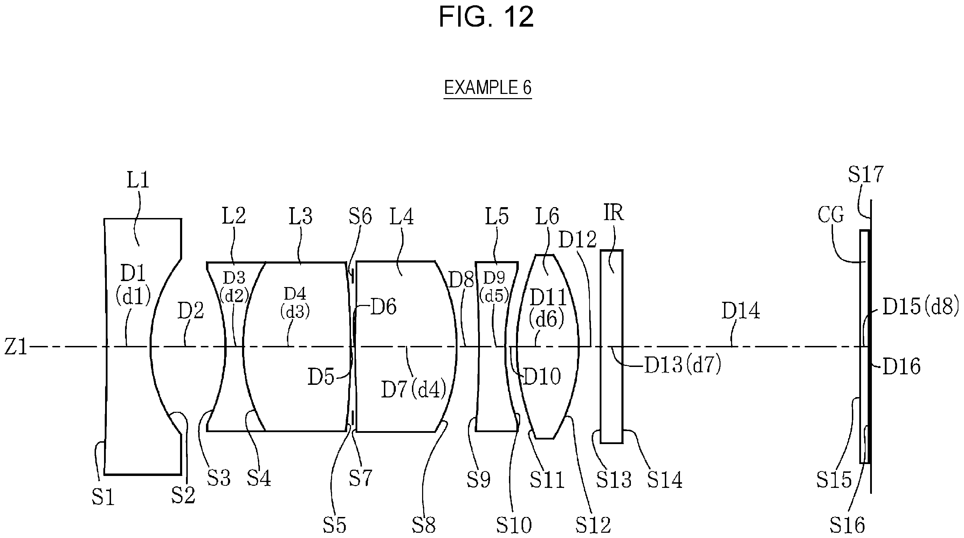

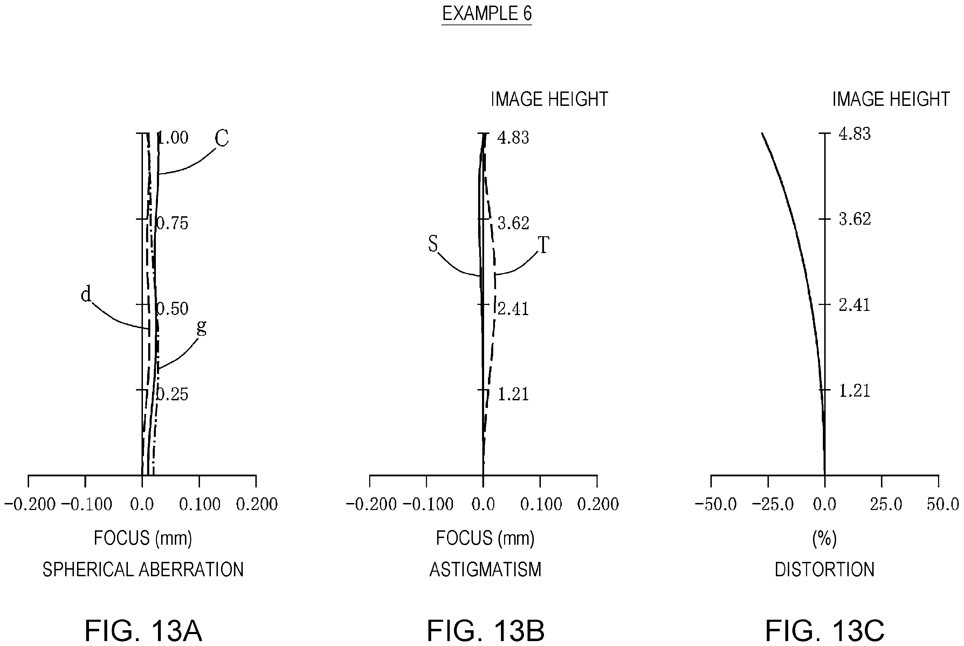

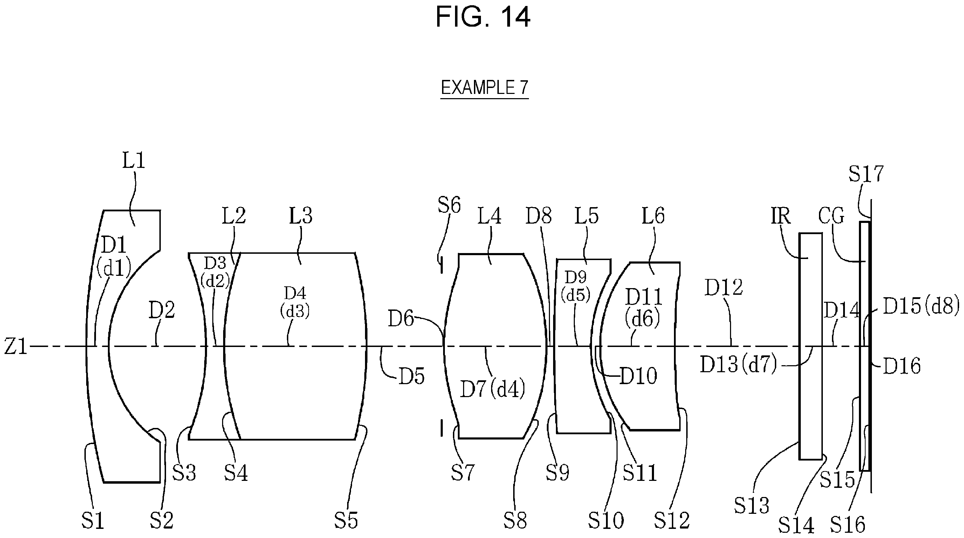

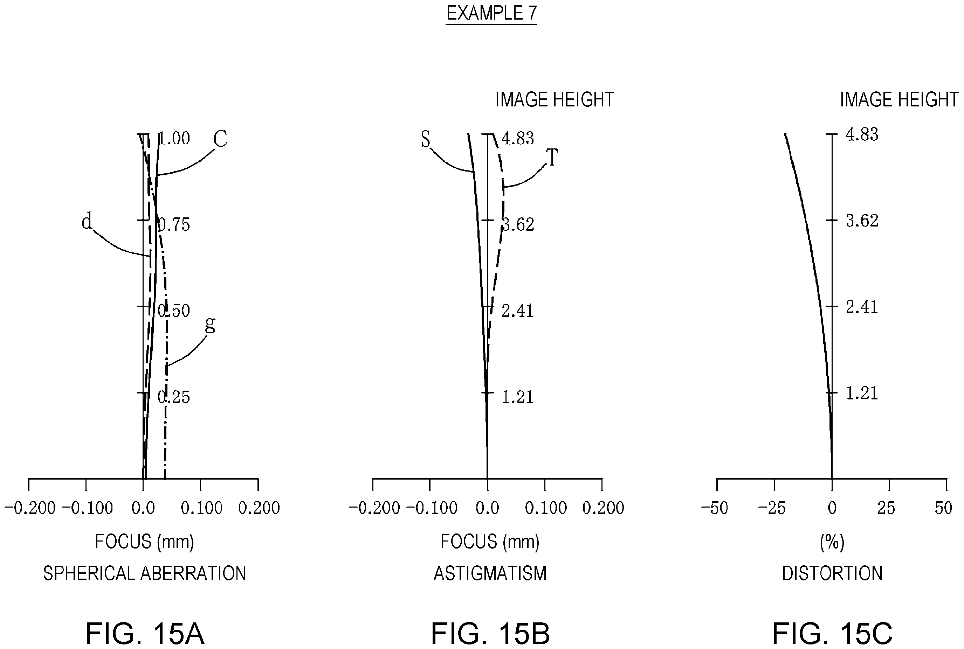

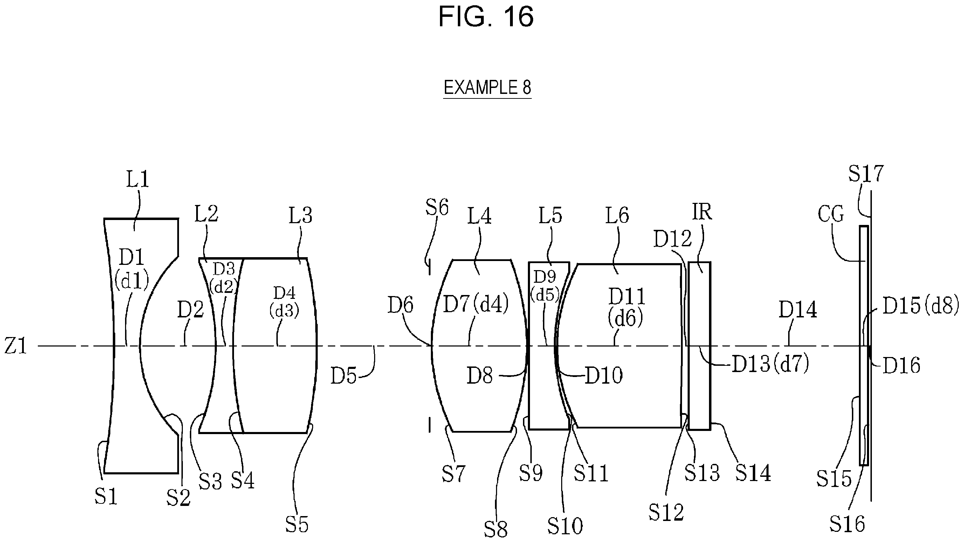

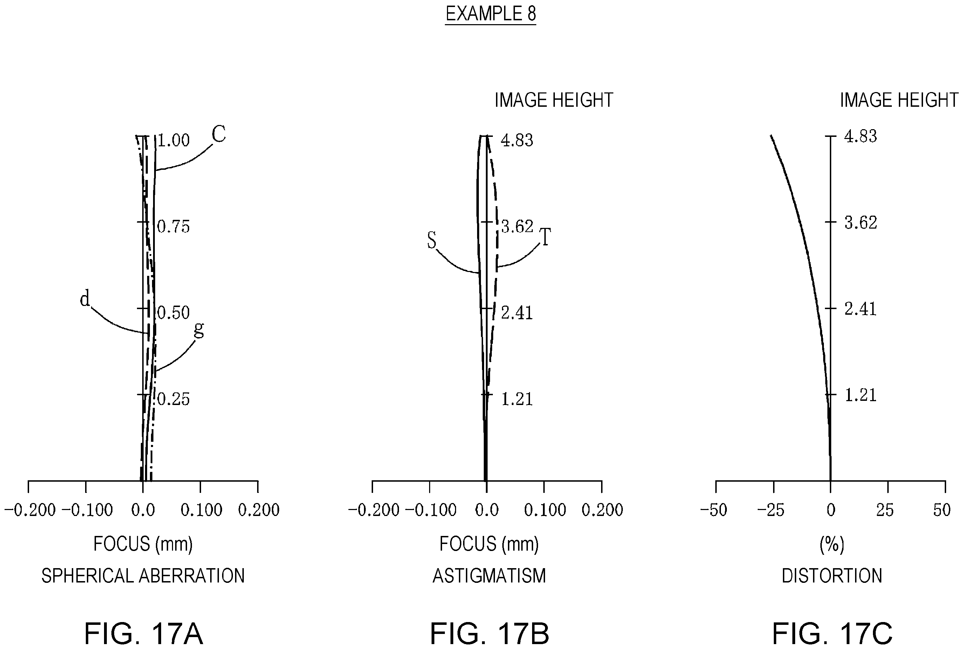

As with Example 1 above, the sectional views of imaging lenses 10 according to Examples 2 to 8 are illustrated in FIGs. 4 to 17C, and the lens data and the aberrations thereof are summarized in Tables 4 to 24. Example 2, Example 3, Example 4, Example 5, Example 6, Example 7, and Example 8 each satisfy all of the conditions defined by Expressions (1) to (7), as with Example 1.

[Table 4]

| EXAMPLE 2 BASIC LENS DATA f = 6.97, Fno =2.20, 2ω = 74 | | | | | |
|---|---|---|---|---|---|
| i | Ri | Di | n | vd | dn/dt |
| 1 | -60 | 1.20 | 1.51742 | 52.1 | |
| 2 | 5.265 | 4.50 | | | |
| 3 | -13.084 | 0.80 | 1.51633 | 64.1 | |
| 4 | 12.657 | 6.53 | 1.881 | 40.1 | |
| 5 | -27.002 | 1.82 | | | |
| 6 (DIAPHRAGM) | ∞ | 0.10 | | | |
| 7* | 8.489 | 4.39 | 1.4841 | 70.3 | -0.6 |
| 8* | -9.541 | 0.20 | | | |
| 9 | -165.59 | 1.20 | 1.7552 | 27.5 | |
| 10 | 8.697 | 0.29 | | | |
| 11* | 7.647 | 2.29 | 1.49556 | 80.8 | -6.4 |
| 12* | -26.873 | 1.79 | | | |
| 13 (IR) | ∞ | 1.00 | 1.51633 | 64.1 | |
| 14 (IR) | ∞ | 8.35 | | | |
| 15 (CG) | ∞ | 0.40 | 1.51633 | 64.1 | |
| 16 (CG) | ∞ | 0.12 | | | |
| 17 (IMAGING SURFACE) | ∞ | | | | |

[Table 5]

| | EXAMPLE 2 ASPHERICAL SURFACE DATA | | | |
|---|---|---|---|---|
| ASPHERICAL COEFFICIENT | 7TH SURFACE (S7) | 8TH SURFACE (S8) | 11 TH SURFACE (S11) | 12TH SURFACE (S12) |
| K | -4.452E-01 | 2.061E+00 | -8.788E+00 | -1.000E+00 |

(continued)

| ASPHERICAL COEFFICIENT | EXAMPLE 2 ASPHERICAL SURFACE DATA | | | |
|---|---|---|---|---|
| | 7TH SURFACE (S7) | 8TH SURFACE (S8) | 11 TH SURFACE (S11) | 12TH SURFACE (S12) |
| A4 | -2.054E-04 | 7.429E-04 | 2.614E-03 | 4.438E-04 |
| A6 | -7.332E-06 | -2.318E-05 | -1.225E-04 | 2.954E-05 |
| A8 | 1.483E-07 | 1.238E-06 | 6.077E-06 | -1.254E-06 |
| A10 | -2.499E-08 | -3.194E-08 | -7.034E-08 | 1.434E-07 |

[Table 6]

| EXAMPLE 2 LENS DATA | |
|---|---|
| D/Db | 2.00 |
| \|R4\|/\|R5\| | 0.47 |
| f/d3 | 1.07 |
| f4/f | 1.45 |
| $(dn_4/dt + dn_6/dt)/f_{46}$ | -0.63 |
| d2/d3 | 0.12 |
| \|R1/D\| | 2.57 |

[Table 7]

| EXAMPLE 3 BASIC LENS DATA $f = 6.88$, Fno $=2.20$, $2\omega = 76$ | | | | | |
|---|---|---|---|---|---|
| i | Ri | Di | n | vd | dn/dt |
| 1 | -40 | 1.20 | 1.51742 | 52.1 | |
| 2 | 5.204 | 3.40 | | | |
| 3 | -13.125 | 0.80 | 1.51633 | 64.1 | |
| 4 | 12.084 | 7.94 | 1.881 | 40.1 | |
| 5 | -29.191 | 1.49 | | | |
| 6 (DIAPHRAGM) | ∞ | 0.10 | | | |
| 7* | 8.403 | 4.31 | 1.4841 | 70.3 | -0.6 |
| 8* | -10.533 | 0.20 | | | |
| 9 | 468.981 | 1.20 | 1.7552 | 27.5 | |
| 10 | 8.838 | 0.28 | | | |
| 11* | 7.8 | 2.42 | 1.49556 | 80.8 | -6.4 |
| 12* | -23.41 | 1.79 | | | |
| 13 (IR) | ∞ | 1.00 | 1.51633 | 64.1 | |
| 14 (IR) | ∞ | 8.35 | | | |
| 15 (CG) | ∞ | 0.40 | 1.51633 | 64.1 | |
| 16 (CG) | ∞ | 0.13 | | | |
| 17 (IMAGING SURFACE) | ∞ | | | | |

[Table 8]

| ASPHERICAL COEFFICIENT | EXAMPLE 3 ASPHERICAL SURFACE DATA | | | |
|---|---|---|---|---|
| | 7TH SURFACE (S7) | 8TH SURFACE (S8) | 11 TH SURFACE (S11) | 12TH SURFACE (S12) |
| K | -4.294E-01 | 2.384E+00 | -8.564E+00 | -1.000E+00 |
| A4 | -2.041E-04 | 7.211E-04 | 2.664E-03 | 6.170E-04 |
| A6 | -6.047E-06 | -3.561E-05 | -1.156E-04 | 3.486E-05 |
| A8 | 1.625E-07 | 2.190E-06 | 6.046E-06 | -1.617E-06 |
| A10 | -1.912E-08 | -6.169E-08 | -5.829E-08 | 1.926E-07 |

[Table 9]

| EXAMPLE 3 LENS DATA | |
|---|---|
| D/Db | 2.00 |
| $\|R4\|/\|R5\|$ | 0.41 |
| f/d3 | 0.87 |
| f4/f | 1.52 |
| $(dn_4/dt + dn_6/dt)/f_{46}$ | -0.65 |
| d2/d3 | 0.10 |
| $\|R1/D\|$ | 1.71 |

[Table 10]

| EXAMPLE 4 BASIC LENS DATA f = 7.00, Fno =2.20, 2ω = 76 | | | | | |
|---|---|---|---|---|---|
| i | Ri | Di | n | vd | dn/dt |
| 1 | -22.371 | 1.20 | 1.51633 | 64.1 | |
| 2 | 5.6 | 2.75 | | | |
| 3 | -65.359 | 5.29 | 1.51633 | 64.1 | |
| 4 | 4.938 | 3.67 | 1.55032 | 75.5 | |
| 5 | -67.092 | 0.10 | | | |
| 6 (DIAPHRAGM) | ∞ | 0.10 | | | |
| 7* | 9.15 | 6.39 | 1.713 | 53.9 | 4.3 |
| 8* | -10.565 | 1.65 | | | |
| 9 | -30.105 | 1.20 | 1.7552 | 27.5 | |
| 10 | 6.795 | 0.10 | | | |
| 11* | 6.888 | 3.80 | 1.51633 | 64.1 | -0.6 |
| 12* | -13.536 | 0.10 | | | |
| 13 (IR) | ∞ | 1.00 | 1.51633 | 64.1 | |
| 14 (IR) | ∞ | 6.07 | | | |
| 15 (CG) | ∞ | 0.40 | 1.51633 | 64.1 | |
| 16 (CG) | ∞ | 1.18 | | | |

(continued)

| EXAMPLE 4 BASIC LENS DATA f = 7.00, Fno =2.20, 2ω = 76 | | | | | |
|---|---|---|---|---|---|
| i | Ri | Di | n | vd | dn/dt |
| 17 (IMAGING SURFACE) | ∞ | | | | |

[Table 11]

| ASPHERICAL COEFFICIENT | EXAMPLE 4 ASPHERICAL SURFACE DATA | | | |
|---|---|---|---|---|
| | 7TH SURFACE (S7) | 8TH SURFACE (S8) | 11TH SURFACE (S11) | 12TH SURFACE (S12) |
| K | 3.394E-01 | 7.258E-01 | -4.372E+00 | -1.000E+00 |
| A4 | -7.919E-05 | 1.092E-03 | 2.499E-03 | 2.570E-06 |
| A6 | -2.085E-06 | -1.848E-05 | -1.095E-04 | 7.289E-06 |
| A8 | 1.445E-07 | 9.146E-07 | 3.974E-06 | -1.941E-06 |
| A10 | -4.379E-09 | -1.153E-08 | -5.301E-08 | 1.014E-07 |

[Table 12]

| EXAMPLE 4 LENS DATA | |
|---|---|
| D/Db | 3.00 |
| |R4|/|R5| | 0.07 |
| f/d3 | 1.91 |
| f4/f | 1.14 |
| $(dn_4/dt + dn_6/dt)/f_{46}$ | 0.38 |
| d2/d3 | 1.44 |
| |R1/D| | 0.85 |

[Table 13]

| EXAMPLE 5 BASIC LENS DATA f = 7.00, Fno =2.20, 2ω = 76 | | | | | |
|---|---|---|---|---|---|
| i | Ri | Di | n | vd | dn/dt |
| 1 | -61.157 | 1.45 | 1.48749 | 70.2 | |
| 2 | 5.113 | 2.62 | | | |
| 3 | -8.741 | 0.80 | 1.58913 | 61.3 | |
| 4 | 15.348 | 2.62 | 1.92119 | 24 | |
| 5 | -52.713 | 0.10 | | | |
| 6 (DIAPHRAGM) | ∞ | 0.21 | | | |
| 7* | -4928.276 | 3.83 | 1.48749 | 70.2 | -0.6 |
| 8* | -6.084 | 0.26 | | | |
| 9 | -34.559 | 1.20 | 2.00069 | 25.5 | |
| 10 | 17.7 | 0.10 | | | |
| 11* | 9.147 | 3.41 | 1.48749 | 70.2 | -0.6 |

(continued)

| EXAMPLE 5 BASIC LENS DATA f = 7.00, Fno =2.20, 2ω = 76 | | | | | |
|---|---|---|---|---|---|
| i | Ri | Di | n | vd | dn/dt |
| 12* | -5.662 | 11.64 | | | |
| 13 (IR) | ∞ | 1.00 | 1.51633 | 64.1 | |
| 14 (IR) | ∞ | 1.00 | | | |
| 15 (CG) | ∞ | 0.40 | 1.51633 | 64.1 | |
| 16 (CG) | ∞ | 1.06 | | | |
| 17 (IMAGING SURFACE) | ∞ | | | | |

[Table 14]

| | EXAMPLE 5 ASPHERICAL SURFACE DATA | | | |
|---|---|---|---|---|
| ASPHERICAL COEFFICIENT | 7TH SURFACE (S7) | 8TH SURFACE (S8) | 11 TH SURFACE (S11) | 12TH SURFACE (S12) |
| K | 8.36E+04 | 6.15E-01 | -1.46E+01 | -1.00E+00 |
| A4 | -1.78E-03 | 1.85E-04 | 1.17E-03 | -5.83E-04 |
| A6 | -9.28E-05 | 3.09E-05 | -1.01E-04 | -3.15E-06 |
| A8 | 3.73E-06 | -2.76E-07 | 4.66E-06 | -1.04E-06 |
| A10 | -1.66E-07 | 1.62E-07 | -8.26E-08 | 2.58E-08 |

[Table 15]

| EXAMPLE 5 LENS DATA | |
|---|---|
| D/Db | 1.10 |
| \|R4\|/\|R5\| | 0.29 |
| f/d3 | 2.67 |
| f4/f | 1.78 |
| $(dn_4/dt + dn_6/dt)/f_{46}$ | -0.14 |
| d2/d3 | 0.30 |
| \|R1/D\| | 3.68 |

[Table 16]

| EXAMPLE 6 BASIC LENS DATA f = 7.00, Fno =2.20, 2ω = 76 | | | | | |
|---|---|---|---|---|---|
| i | Ri | Di | n | vd | dn/dt |
| 1 | -137.239 | 2.00 | 1.60729 | 59.5 | |
| 2 | 6.42 | 3.43 | | | |
| 3 | -7.809 | 0.80 | 1.51633 | 64.1 | |
| 4 | 7.65 | 4.93 | 1.8061 | 40.7 | |
| 5 | -33.505 | 0.10 | | | |

(continued)

| EXAMPLE 6 BASIC LENS DATA f = 7.00, Fno =2.20, 2ω = 76 | | | | | |
| --- | --- | --- | --- | --- | --- |
| i | Ri | Di | n | vd | dn/dt |
| 6 (DIAPHRAGM) | ∞ | 0.10 | | | |
| 7* | 27.626 | 4.66 | 1.58913 | 61.1 | 3.9 |
| 8* | -8.778 | 1.02 | | | |
| 9 | -48.872 | 1.20 | 1.76182 | 26.6 | |
| 10 | 11.124 | 0.53 | | | |
| 11* | 8.946 | 2.83 | 1.497 | 81.5 | -6.4 |
| 12* | -8.143 | 8.64 | | | |
| 13 (IR) | ∞ | 1.00 | 1.5168 | 64.2 | |
| 14 (IR) | ∞ | 1.00 | | | |
| 15 (CG) | ∞ | 0.40 | 1.5168 | 64.2 | |
| 16 (CG) | ∞ | 2.36 | | | |
| 17 (IMAGING SURFACE) | ∞ | | | | |

[Table 17]

| | EXAMPLE 6 ASPHERICAL SURFACE DATA | | | |
| --- | --- | --- | --- | --- |
| ASPHERICAL COEFFICIENT | 7TH SURFACE (S7) | 8TH SURFACE (S8) | 11 TH SURFACE (S11) | 12TH SURFACE (S12) |
| K | -2.170E+01 | 9.719E-01 | -1.167E+01 | -1.000E+00 |
| A4 | -8.804E-04 | -1.361E-04 | 1.353E-03 | -2.101E-04 |
| A6 | -3.074E-05 | -3.015E-06 | -8.469E-05 | 2.273E-06 |
| A8 | 3.194E-07 | 1.487E-07 | 3.190E-06 | -7.261E-07 |
| A10 | -4.390E-08 | -6.489E-10 | -4.967E-08 | 2.180E-08 |

[Table 18]

| EXAMPLE 6 LENS DATA | |
| --- | --- |
| D/Db | 1.61 |
| \|R4\|/\|R5\| | 0.23 |
| f/d3 | 1.42 |
| f4/f | 1.70 |
| $(dn_4/dt + dn_6/dt)/f_{46}$ | -0.25 |
| d2/d3 | 0.16 |
| \|R1/D\| | 6.35 |

[Table 19]

| EXAMPLE 7 BASIC LENS DATA f = 6.14, Fno =2.20, 2ω = 80 | | | | | |
|---|---|---|---|---|---|
| i | Ri | Di | n | vd | dn/dt |
| 1 | 24 | 1.00 | 1.804 | 46.6 | |
| 2 | 5.123 | 4.34 | | | |
| 3 | -10.366 | 0.80 | 1.497 | 81.5 | |
| 4 | 11.98 | 6.35 | 1.804 | 46.6 | |
| 5 | -16.741 | 3.36 | | | |
| 6 (DIAPHRAGM) | ∞ | 0.10 | | | |
| 7* | 8.336 | 4.57 | 1.497 | 81.5 | -6.4 |
| 8* | -8.809 | 0.33 | | | |
| 9 | 51.086 | 1.65 | 1.7552 | 27.5 | |
| 10 | 6.441 | 0.41 | | | |
| 11* | 5.828 | 3.34 | 1.497 | 81.5 | -6.4 |
| 12* | 50.041 | 5.55 | | | |
| 13 (IR) | ∞ | 1.00 | 1.51633 | 64.1 | |
| 14 (IR) | ∞ | 1.70 | | | |
| 15 (CG) | ∞ | 0.40 | 1.51633 | 64.1 | |
| 16 (CG) | ∞ | 0.11 | | | |
| 17 (IMAGING SURFACE) | ∞ | | | | |

[Table 20]

| ASPHERICAL COEFFICIENT | EXAMPLE 7 ASPHERICAL SURFACE DATA | | | |
|---|---|---|---|---|
| | 7TH SURFACE (S7) | 8TH SURFACE (S8) | 11 TH SURFACE (S11) | 12TH SURFACE (S12) |
| K | -8.25E-01 | 1.52E+00 | -4.91E+00 | -1.00E+00 |
| A4 | -3.03E-04 | 4.62E-04 | 2.96E-03 | 6.54E-04 |
| A6 | -1.35E-05 | -9.86E-06 | -1.09E-04 | 4.63E-05 |
| A8 | 6.54E-08 | 3.26E-08 | 4.88E-06 | -2.55E-06 |
| A10 | -3.86E-08 | -3.30E-09 | -6.45E-08 | 1.92E-07 |

[Table 21]

| EXAMPLE 7 LENS DATA | |
|---|---|
| D/Db | 3.00 |
| $|R4|/|R5|$ | 0.72 |
| f/d3 | 0.97 |
| f4/f | 1.54 |
| $(dn_4/dt + dn_6/dt)/f_{46}$ | -1.15 |
| d2/d3 | 0.13 |

(continued)

| EXAMPLE 7 LENS DATA | |
|---|---|
| |R1/D| | 0.91 |

[Table 22]

| EXAMPLE 8 BASIC LENS DATA f=6.90, Fno =2.2, 2ω = 76 | | | | | |
|---|---|---|---|---|---|
| i | Ri | Di | n | vd | dn/dt |
| 1 | -35.000 | 1.20 | 1.51742 | 52.1 | |
| 2 | 5.692 | 3.50 | | | |
| 3 | -10.180 | 0.80 | 1.51633 | 64.1 | |
| 4 | 17.201 | 3.88 | 1.88100 | 40.1 | |
| 5 | -17.359 | 5.21 | | | |
| 6 (DIAPHRAGM) | ∞ | 0.10 | | | |
| 7* | 8.085 | 4.40 | 1.49700 | 81.5 | -6.4 |
| 8* | -10.119 | 0.10 | | | |
| 9 | 1663.982 | 1.20 | 1.75520 | 27.5 | |
| 10 | 9.178 | 0.10 | | | |
| 11* | 7.307 | 5.77 | 1.48749 | 70.2 | -0.6 |
| 12* | -75.161 | 0.32 | | | |
| 13 (IR) | ∞ | 1.00 | 1.51633 | 64.1 | |
| 14 (IR) | ∞ | 6.89 | | | |
| 15 (CG) | ∞ | 0.40 | 1.51633 | 64.1 | |
| 16 (CG) | ∞ | 0.14 | | | |
| 17 (IMAGING SURFACE) | ∞ | | | | |

[Table 23]

| | EXAMPLE 8 ASPHERICAL SURFACE DATA | | | |
|---|---|---|---|---|
| ASPHERICAL COEFFICIENT | 7TH SURFACE (S7) | 8TH SURFACE (S8) | 11 TH SURFACE (S11) | 12TH SURFACE (S12) |
| K | -1.46E-01 | 1.97E+00 | -7.98E+00 | -1.00E+00 |
| A4 | -1.30E-04 | 7.20E-04 | 2.35E-03 | 3.52E-04 |
| A6 | -3.78E-06 | -2.15E-05 | -1.45E-04 | 4.86E-06 |
| A8 | -1.56E-07 | 1.13E-06 | 6.30E-06 | -2.55E-07 |
| A10 | -4.55E-09 | -2.81E-08 | -1.49E-07 | 4.57E-09 |

[Table 24]

| EXAMPLE 8 LENS DATA | |
|---|---|
| D/Db | 3.00 |
| |R4|/|R5| | 0.99 |

(continued)

| EXAMPLE 8 LENS DATA | |
|---|---|
| f/d3 | 1.78 |
| f4/f | 1.42 |
| $(dn_4/dt + dn_6/dt)/f_{46}$ | -0.65 |
| d2/d3 | 0.21 |
| \|R1/D\| | 1.33 |

The above embodiment and examples can be changed in various ways. As an alternative to the imaging lenses 10 described in the above examples, changing the radius of curvature, the refractive index, and/or any other lens data provides an imaging lens equivalent to the imaging lens 10 in terms of shape, arrangement, and imaging performance.

REFERENCE SIGNS

10 imaging lens
D1 to D16 interval on optical axis Z1 from surface Si to surface Si + 1 (where i is an integer of 1 to 16)
d1 to d6 thicknesses of first to sixth lenses
L1 to L6 first to sixth lenses
S6 diaphragm
G1 to G5 first to fifth lens groups
IR infrared cut filter
CG cover glass
S17 imaging surface

**Claims**

1. An imaging lens comprising, in order from an object side:

   a first lens group having negative power;
   a second lens group having negative power;
   a third lens group having positive power;
   a fourth lens group having negative power; and
   a fifth lens group having positive power,
   wherein the first lens group, the second lens group, the third lens group, the fourth lens group, and the fifth lens group each comprise at least one lens, and
   wherein letting:

      a distance on an optical axis from a lens surface at an extreme end on the object side in the first lens group to a lens surface at an extreme end on an image side in the fifth lens group be D; and
      a distance on the optical axis from the lens surface at the extreme end on the image side in the fifth lens group to an imaging surface be Db,

   the imaging lens satisfies Expression (1) below:

$$1.10 \leq D/Db \leq 3.00 \qquad (1)$$

2. The imaging lens according to claim 1,
   wherein the second lens group comprises:

      a second lens having negative power; and

a third lens having positive power.

3.  The imaging lens according to claim 2,
    wherein an obj ect-side surface of the third lens has a smaller radius of curvature in absolute value than an image-side surface of the third lens.

4.  The imaging lens according to claim 2 or 3,
    wherein letting:

    a radius of curvature of an object-side surface of the third lens be R4; and
    a radius of curvature of an image-side surface of the third lens be R5, the imaging lens satisfies Expression (2) below:

$$0.07 \leq |R4|/|R5| \leq 0.99 \quad (2)$$

5.  The imaging lens according to any of claims 2 to 4,

    wherein letting:

    a focal length of an entire system be f; and
    a thickness of the third lens be d3,

    the imaging lens satisfies Expression (3) below:

$$0.75 \leq f/d3 \leq 2.67 \quad (3)$$

6.  The imaging lens according to any of claims 2 to 5,
    wherein the second lens and the third lens are cemented to each other.

7.  The imaging lens according to any of claims 1 to 6,
    wherein:

    the third lens group comprises a fourth lens having positive power;
    the fourth lens group comprises a fifth lens having negative power; and
    the fifth lens group comprises a sixth lens having positive power.

8.  The imaging lens according to claim 7,

    wherein letting:

    a focal length of the fourth lens be f4; and
    a focal length of an entire system be f,

    the imaging lens satisfies Expression (4) below:

$$1.14 \leq f4/f \leq 1.78 \quad (4)$$

9.  The imaging lens according to claim 7 or 8,

    wherein letting:

    a temperature coefficient of refractive index of the fourth lens be dnVdt;
    a temperature coefficient of refractive index of the sixth lens be $dn_6/dt$; and
    a composite focal length of the fourth to sixth lenses be $f_{46}$,

the imaging lens satisfies Expression (5) below:

$$-1.21 \le (dn_4/dt + dn_6/dt)/f_{46} \le 0.38 \quad (5)$$

10. The imaging lens according to any of claims 2 to 9,

wherein letting:

a thickness of the second lens be d2; and
a thickness of the third lens be d3,

the imaging lens satisfies Expression (6) below:

$$0.10 \le d2/d3 \le 1.44 \quad (6)$$

11. The imaging lens according to any of claims 1 to 10,

wherein letting a radius of curvature of the lens surface at the extreme end on the object side in the first lens group be R1,
the imaging lens satisfies Expression (7) below:

$$0.58 \le |R1/D| \le 6.35 \quad (7)$$

# FIG. 1

EP 4 270 082 A1

# FIG. 2

EXAMPLE 1

EXAMPLE 1

FIG. 3A

SPHERICAL ABERRATION

FIG. 3B

ASTIGMATISM

FIG. 3C

DISTORTION

# FIG. 4

EXAMPLE 2

EP 4 270 082 A1

EXAMPLE 2

FIG. 5A

SPHERICAL ABERRATION

FIG. 5B

ASTIGMATISM

FIG. 5C

DISTORTION

# FIG. 6

<u>EXAMPLE 3</u>

EP 4 270 082 A1

EXAMPLE 3

FIG. 7A
SPHERICAL ABERRATION

FIG. 7B
ASTIGMATISM

FIG. 7C
DISTORTION

EP 4 270 082 A1

FIG. 8

EXAMPLE 4

EXAMPLE 4

IMAGE HEIGHT

IMAGE HEIGHT

1.00 C

0.75

d

0.50

g

0.25

4.83

S ⌐ ⌐ T

3.62

2.41

1.21

4.83

3.62

2.41

1.21

-0.200 -0.100  0.0  0.100  0.200

FOCUS (mm)

SPHERICAL ABERRATION

-0.200 -0.100  0.0  0.100  0.200

FOCUS (mm)

ASTIGMATISM

-50.0 -25.0  0.0  25.0  50.0

(%)

DISTORTION

FIG. 9A

FIG. 9B

FIG. 9C

EP 4 270 082 A1

FIG. 10

EXAMPLE 5

EXAMPLE 5

FIG. 11A — SPHERICAL ABERRATION (FOCUS (mm))

FIG. 11B — ASTIGMATISM (FOCUS (mm))

FIG. 11C — DISTORTION (%)

## FIG. 12

EXAMPLE 6

EXAMPLE 6

IMAGE HEIGHT

IMAGE HEIGHT

EP 4 270 082 A1

FOCUS (mm)

SPHERICAL ABERRATION

FOCUS (mm)

ASTIGMATISM

(%)

DISTORTION

FIG. 13A

FIG. 13B

FIG. 13C

# FIG. 14

EP 4 270 082 A1

EXAMPLE 7

EXAMPLE 7

IMAGE HEIGHT

IMAGE HEIGHT

1.00 C

S 4.83 T

4.83

d

0.75

3.62

3.62

0.50

g

2.41

2.41

0.25

1.21

1.21

-0.200 -0.100  0.0  0.100  0.200

-0.200 -0.100  0.0  0.100  0.200

-50  -25  0  25  50

FOCUS (mm)

FOCUS (mm)

(%)

SPHERICAL ABERRATION

ASTIGMATISM

DISTORTION

FIG. 15A

FIG. 15B

FIG. 15C

EP 4 270 082 A1

FIG. 16

EXAMPLE 8

EXAMPLE 8

FIG. 17A

SPHERICAL ABERRATION

FOCUS (mm)

FIG. 17B

ASTIGMATISM

FOCUS (mm)

FIG. 17C

DISTORTION

(%)

## INTERNATIONAL SEARCH REPORT

| International application No. |
|---|
| **PCT/JP2021/045675** |

| A. | CLASSIFICATION OF SUBJECT MATTER |
|---|---|

*G02B 13/04*(2006.01)i; *G02B 13/18*(2006.01)i
FI:    G02B13/04 D; G02B13/18

According to International Patent Classification (IPC) or to both national classification and IPC

| B. | FIELDS SEARCHED |
|---|---|

Minimum documentation searched (classification system followed by classification symbols)

G02B13/04; G02B13/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2018-136476 A (FUJIFILM CORP.) 30 August 2018 (2018-08-30)<br>example 5 | 1-5, 7-11 |
| A | entire text, all drawings | 6 |
| X | US 2019/0196150 A1 (RAYS OPTICS INC.) 27 June 2019 (2019-06-27)<br>paragraphs [0014]-[0028], fig. 1 | 1-3, 5, 7, 8, 10 |
| A | entire text, all drawings | 4, 6, 9 |
| A | US 2017/0184815 A1 (NINGBO SUNNY AUTOMOTIVE OPTECH CO., LTD.) 29 June 2017 (2017-06-29)<br>entire text, all drawings | 1-11 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 February 2022** | **22 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/045675**

| Patent document cited in search report | | | Publication date (day/month/year) | Patent family member(s) | Publication date (day/month/year) |
|---|---|---|---|---|---|
| JP | 2018-136476 | A | 30 August 2018 | (Family: none) | |
| US | 2019/0196150 | A1 | 27 June 2019 | (Family: none) | |
| US | 2017/0184815 | A1 | 29 June 2017 | CN 111796396 A entire text, all drawings | |

Form PCT/ISA/210 (patent family annex) (January 2015)

**REFERENCES CITED IN THE DESCRIPTION**

**Patent documents cited in the description**

- JP 2019090989 A